# EUROPEAN PATENT SPECIFICATION

(11) **EP 4 508 387 B1**
(45) Date of publication and mention of the grant of the patent: **21.10.2026**
(21) Application number: 23725526.0
(22) Date of filing: 27.04.2023
(51) Int. Cl.: G01B 3/1043, G01B 3/1007

(54) **TAPE MEASURE HOUSING WITH EXTENDED MOUTH AND FINGER BRAKE OPENING**
MESSBANDGEHÄUSE MIT VERLÄNGERTER ÖFFNUNG UND FINGERBREMSÖFFNUNG
BOÎTIER POUR MÈTRE RUBAN DOTÉ D'UNE BOUCHE ÉTENDUE ET D'UNE OUVERTURE DE FREIN À DOIGT

(30) Priority: 29.04.2022 US 202263336728 P
(43) Date of publication of application: 19.02.2025
(60) Divisional application: 26204246.8
(73) Proprietor: Stanley Black & Decker, Inc., New Britain, CT 06053 (US)
(72) Inventor: WEN, Hsiao-Ting, Taichung City 407 (TW); WANG, Kuan Chieh, Taichung City 428 (TW)
(74) Representative: Gill Jennings & Every LLP
(86) International application number: PCT/US2023/020204
(87) International publication number: WO 2023/212195

(56) References cited:
- US-A1- 2004 163 272
- US-A1- 2013 133 215

## Description

### FIELD OF THE INVENTION

The present invention relates to tape measures of the type comprising a housing containing a coiled elongate flexible measuring tape which is extendable from, and automatically retractable back into, the housing.

### BACKGROUND

Conventional finger brake opening may form a weak point on a tape measure housing due to the relative lack of structure thereat. As such, dropping a tape measure at the juncture between a wear plate and a finger brake opening may cause breakage at the juncture due to transmission of forces pushing the tape mouth and finger brake defining structure into either the finger brake opening or the tape mouth opening, causing breaking of the structure. In such conventional tape measure, an existing seam splitting the tape mouth and finger brake defining structure may facilitate breakages at such structure when receiving an undesired impact. Among other things, the present disclosure improves upon known finger brakes on tape measures and known wear plates on tape measures.

US 2004/163272 A1 discloses a tape measure having a spooled measuring blade. The tape measure comprising a case including two parts and is constructed by subsequently fitting the two parts together via connection points. The blade can be braked with respect to the opening by operation of braking means. The braking means are operable via a switch which has a length greater than the radius of the fully spooled blade.

US 2013/133215 A1 discloses a tape measure having a finger recess in a housing, with at least a portion of the underside of a tape blade exposed in the finger recess. Pressing a finger against the underside of the tape allows the user to create a drag brake that acts against the retraction spring to slow and/or stop the retraction of the tape blade.

### SUMMARY OF THE INVENTION

According to one aspect of this disclosure, a tape measure comprises a housing comprising a first housing portion and a second housing portion, the first housing portion and the second housing portion together defining a mouth, and separated by a seam. The tape measure also comprises a spool configured to be secured between the first housing portion and the second housing portion, the spool containing a tape blade wound thereon and partially extending therefrom through the mouth, the tape blade terminating in a hook portion. The seam is formed both above the mouth and at a side of the mouth, such that a structure of the first housing portion extends at least substantially an entire width of the mouth, under the tape blade. The tape blade is biased to retract into the housing and wind around the spool, such that in a fully retracted position the hook portion abuts the structure of the first housing portion. In an extended position the tape blade is unwound from the spool such that the hook extends away from the mouth.

These and other objects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment of the invention, the structural components illustrated herein are drawn to scale. It is to be expressly understood, however, that the drawings are for the purpose of illustration and description only, and are not intended as a definition of the limits of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

### BRIEF DESCRIPTION OF THE DRAWINGS

Features of tape measures in accordance with one or more embodiments are shown in the drawings, in which like reference numerals designate like elements. The drawings form part of this original disclosure in which:
Figure 1 illustrates a perspective view of an embodiment of a tape measure of the present disclosure, having an extended finger brake opening thereof;
Figure 2 depicts an exploded perspective view of the embodiment of the tape measure of Figure 1;
Figure 3 illustrates an enlarged isolated exploded perspective view of a housing of the tape measure, showing portions of the finger brake defining structure associated with each of a first and second housing side; and
Figures 4A-4C illustrate isolated, enlarged and assembled views of another embodiment of a housing of a tape measure, showing portions of the finger brake defining structure associated with each of a first and second housing side.

### DETAILED DESCRIPTION OF THE ILLUSTRATED EMBODIMENT(S)

An aspect of this invention may comprise a tape measure that includes a finger brake opening that facilitates a user pressing on a portion of the blade through an opening in a housing of the tape measure. In particular, structure defining both a mouth of the tape measure and the finger brake opening (e.g., extending across the entirety of the tape blade) may be formed on one side of the housing, such that the common tape mouth and finger brake structure includes a seamless region thereat. In some embodiments, the structure may further define a wear plate that supports the mouth of the tape measure from which the measuring tape extends and against which a hook of the tape retracts.

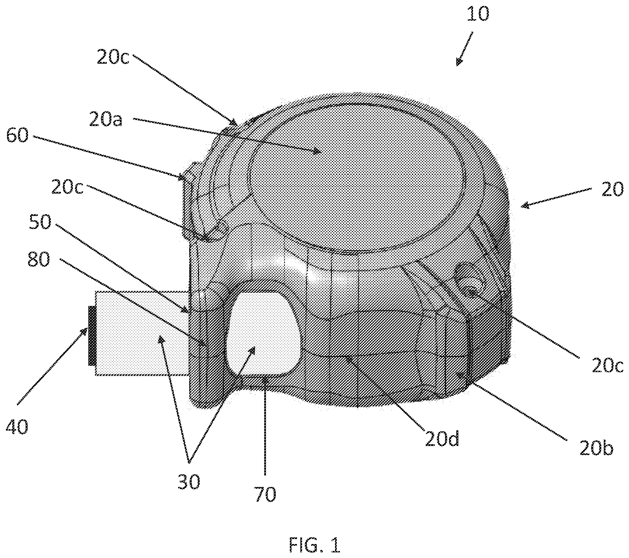

As shown in Figure 1, a tape measure 10 may include a housing 20 containing a tape blade 30 which may terminate in a tape hook 40. The housing 20 may be made of any appropriate material, and typically may be formed from plastic, such as housing sides 20a and 20b that are joined together by fasteners 20c, such that the housing sides 20a and 20b have a defined seam 20d therebetween. In an embodiment, the seam 20d may generally bisect the tape measure housing 20, except as otherwise described herein. The tape blade 30 may extend from and retract into a mouth 50 of the tape measure 10. The tape blade 30 may be spring or otherwise automatically retractable into the housing 20. The tape hook 40 may prevent the tape blade 30 from being pulled completely into the housing 20, by abutting against surrounding structure of the mouth 50, as described in greater detail below. A locking mechanism, such as a slide lock 60, may also selectively clamp the tape blade 30, such as into an extended position protruding from the mouth 50. As further shown in the illustrated embodiment, a finger brake opening 70 may expose a generally flat expanse of the tape blade 30 and facilitate a user using their finger to press the blade 30 against the housing 20 or other internal features of the tape measure 10, so as to prevent automatic retraction of the tape blade 30 into the housing 20 without separate actuation of the slide lock 60 or similar locking mechanism.

It is an aspect of the present disclosure that the housing 20 includes the housing side 20a secured to the housing side 20b such that the seam 20d is formed therebetween, facilitating assembly of the housing 20 around a spool of the tape blade 30 therein. It is also an aspect of the present disclosure that a common tape mouth and finger brake structure 80 is formed with the housing side 20a, and is configured to extend across a width of the tape blade 30 so that the common tape mouth and finger brake structure 80 is generally seamless across width of the tape blade 30 thereat. Accordingly, the common tape mouth and finger brake structure 80 includes a seamless region thereat includes a seamless region, where the seam 20d between the housing side 20a and the housing side 20b extends at a side of the width of the tape blade 30 at the common tape mouth and finger brake structure 80. In some embodiments, it may be understood that a portion of the common tape mouth and finger brake structure 80 may be reinforced to act as a wear plate, which may prevent excessive wear to the mouth 50 or to the hook 40 as the hook 40 repeatedly is biased into the mouth 50 when the blade 30 is automatically retracted. The common tape mouth and finger brake structure 80 is described in greater detail below.

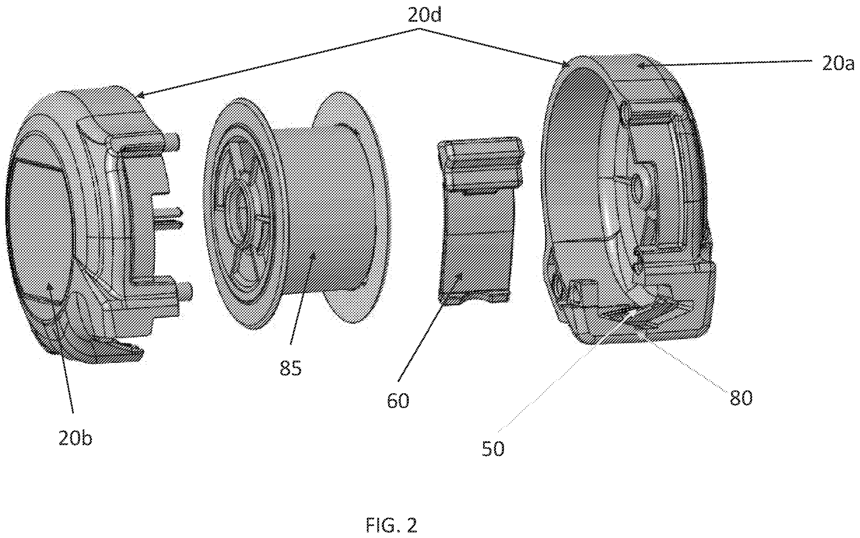

As seen in greater detail in Figure 2, depicting an exploded view of notable components of the tape measure 10, the housing 20 may be separated at the seam 20d by removal of the fasteners 20c (not shown) that would normally be inserted into one of housing side 20a and housing side 20b, and extend across the seam 20d to secure the housing side 20a to the housing side 20b. As further shown, contained within the housing 20 may be the slide lock 60 in some embodiments. Other embodiments of the tape measure 10 may utilize other locking mechanisms to selectively lock the tape blade 30 (omitted in Figure 2) in an extended position, such as an auto-lock feature. In the illustrated embodiment, a tape spool 85 is further shown, around which the tape blade 30 may be wound. The tape spool 85 may include therein a spring and function as a tape motor to facilitate auto-retraction of the tape blade 30 when the tape blade 30 is extended from the mouth 50.

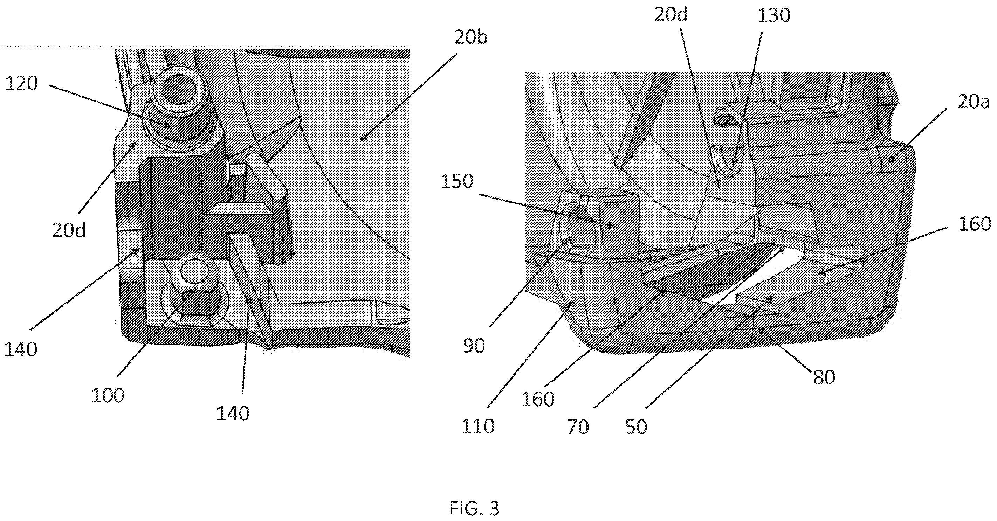

Turning to Figure 3, the common tape mouth and finger brake structure 80 may be appreciated in greater detail. As shown in the enlargements of the housing side 20a and housing side 20b facing one another, the common tape mouth and finger brake structure 80 may be formed on the first housing side 20a and extend under at least substantially the entire width of the mouth 50 that permits extension of the tape blade 30 therethrough.

As shown, in an embodiment an engagement feature 90 may be formed on an end of the structure 80 distal from the bulk of the housing side 20a, and may engage an engagement feature 100 formed on the housing side 20b. In the illustrated embodiment the engagement feature 90 formed on the structure 80 of the housing side 20a is a recess, while the engagement feature 100 on the housing side 20b is a protrusion that is received in the recess of engagement feature 90. In other embodiments, the engagement feature 90 may be a protrusion while the engagement feature 100 is a recess.

As further shown, in an embodiment a terminal side 110 of the structure 80 may define the exterior of the housing side 20a thereat that substantially faces a same direction as an exterior of the housing side 20b. As such, the structure 80 may define a portion of both of opposing sides of the housing 20 (e.g., the side formed by housing side 20a and the side substantially formed by the housing side 20b).

Further shown in Figure 3 are other housing side engagement features, such as the protrusion 120 and the recess 130. In the illustrated embodiment, the protrusion 120 is formed on the housing side 20b and is received in the recess 130 formed on the housing side 20a. it may be appreciated that both the protrusion 120 and the recess 130 may include an aperture that forms a common path for the fasteners 20c to be inserted in one side and extend and secure to the other. It may be appreciated that the positioning of the protrusion 120 and recess 130 may be inverted across the housing sides 20a and 20b. It may also be appreciated that other inter-engaging securement structures may be utilized in other embodiments.

It may be appreciated that the entirety of the housing side 20a including the entirety of the structure 80 may be formed from a single piece of material. For example, in an embodiment, the housing side 20a including the structure 80 may be formed of metal, such as a cast, stamped, or molded metal, a 3D printed metal, or formed in other such processes. In other embodiments, the housing side 20a including the structure 80 may be formed from plastic, such as 3D printed plastic, injection molded plastic, or formed in other such processes.

In some embodiments, the housing side 20b may include reinforcement structures 140 which may secure the region of the terminal side 110 including the engagement feature 90 into the housing side 20b, which may be supplementary to engagement between the engagement feature 90 on the side 20a and the engagement feature 100 on the side 20b. For example, in the illustrated embodiment, the region 150 formed on the terminal side 110 of the structure 80, and that includes the engagement feature 90 thereon, is formed with a recessed shape relative to the remainder of the terminal side 110, such that the region 150 is received inside the reinforcement structures 140 of the side 20b. It may be appreciated that such interlocking between the structure 80 and the housing side 20b may prevent undesired movement of the extension of the structure 80 across the mouth 50 (and at the front of the finger brake opening 70 adjacent thereto) and thus may deter breakage of the housing 20 thereat in the event of an unintended drop or striking impact of the tape measure 10.

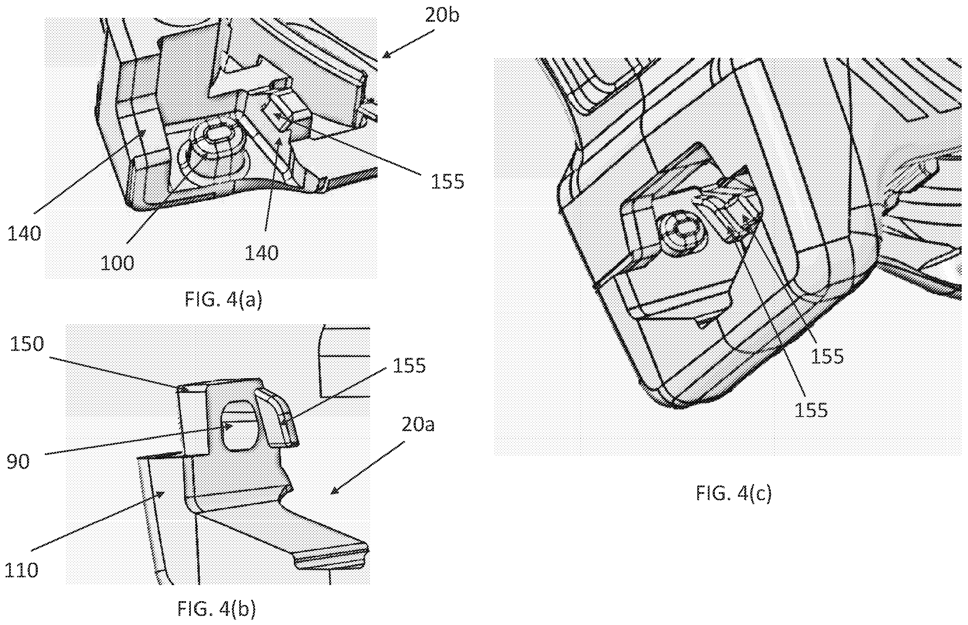

As shown in Figure 4(a) and Figure 4(b), in some embodiments the reinforcement structures 140 of the housing side 20a and the terminal side 110 of the structure 80 formed on the housing side 20a (e.g., at the region 150 thereof) may have securement features 155 thereat to further secure the housing side 20a to the housing side 20b at the structure 80. As shown, for example, in the illustrated embodiment a securement feature 155 on the housing side 20b (e.g., formed on the reinforcement structure 140) may engage with a securement feature 155 on the housing side 20a (e.g., formed on the region 150. In the illustrated embodiment, the securement features 155 comprise a snap fit engagement therebetween, as illustrated in Figure 4(c), such that a ramped structure on one of the securement features 155 deflects or deforms around the other securement feature 155 then expands to retrain the securement feature 155 and deter unwanted separation of the housing side 20b and the housing side 20a. Other securement features 155 may alternatively or additionally be utilized, including but not limited to threaded fasteners, welds, or so on. It may be appreciated that such additional engagement through the securement feature 155 may prevent overall case deformation, and may close or eliminate gaps between the housing side 20a and the housing side 20b.

Returning to Figure 3, In some embodiments the structure 80 may include blade guide features which may limit movement of the blade 30, so as to prevent rubbing of the blade 30 against the housing 20 as the blade 30 retracts. For example, the structure 80 includes blade guide features 160 defining parts of the mouth 50, which may match and support a contour of the blade 30, and/or may be configured to provide impact support strength to the component 80. In some embodiments, while a bottom of the mouth 50 is entirely defined by a shape of the structure 80, a top of the mouth 50 may be defined in part by the side 20a and in part by the side 20b. Similarly, it may be appreciated that a perimeter of the finger brake opening 70 may be defined at a front side entirely by the structure 80, at one side thereof entirely by the side 20a, and the other side entirely by the side 20b, and at a rear thereof by portions of the side 20a and the side 20b, with the seam 20d therebetween.

It may be appreciated that in various embodiments, the structures of inter-engaging features on the sides 20a and 20b described herein may be inverted from those described and illustrated, both in configuration and in position as described herein. While in the illustrated embodiment the securement of the housing sides 20a and 20b are through the described inter-engaging features, in other embodiments fasteners, adhesives, or other appropriate mechanisms may hold closed the seam 20d formed between the housing side 20a and the housing side 20b.

The objects, features, and characteristics of the present invention, as well as the methods of operation and functions of the related elements of structure and the combination of parts and economies of manufacture, may be apparent upon consideration of the description and drawings herein, all of which form a part of this specification. In one embodiment of the invention, the structural components illustrated herein are drawn to scale. It is to be expressly understood, however, that the drawings are for the purpose of illustration and description only and are not intended as a definition of the limits of the invention. In addition, it should be appreciated that structural features shown or described in any one embodiment herein can be used in other embodiments as well. As used herein, the singular form of "a", "an", and "the" include plural referents unless the context clearly dictates otherwise.

In various embodiments, tools and components thereof described herein may be formed of combinations of metal, plastic, ceramic, or any other appropriate material. It may be appreciated that the components described herein may be of different constructions or configurations, including but not limited to one or more being comprised of different material choices. For example, various components described herein may each be constructed from a variety of materials, including but not limited to one or more of fabrics, plastics, metals, rubbers, elastomers, or any other appropriate material choice, such as aluminum (e.g., machined aluminum), iron (e.g., steel), ceramic, or any other appropriate material. In addition to the components disclosed above, portions of tools leveraging the above teachings may be formed from molded or 3D printed plastic, metal, or combinations thereof (e.g., plastic with metal supports or fasteners coupling portions tougher). In some embodiments, structural and functional components may be formed from metal or hard plastic, while exterior-most gripped components positioned to engage the palm of a gripping hand to provide the palm with a comfortable gripping surface may be made of a suitable molded plastic material or elastomeric material, and may be generally formed as a bi-material suitable molded plastic material coated with a layer of an elastomeric material, such as a rubber-based material. In some embodiments, the material choices may differ from component to component. In various embodiments, some components may be integrally formed together, while other components may be assembled by any appropriate mechanism, including but not limited to fastened, welded, snap-fit, friction fit, adhesive bonding, or other appropriate securements.

## Claims

1. A tape measure (10) comprising:
a housing (20) comprising a first housing portion (20a) and a second housing portion (20b), the first housing portion (20a) and the second housing portion (20b) together defining a mouth (50), and separated by a seam (20d); and
a spool (85) configured to be secured between the first housing portion (20a) and the second housing portion (20b), the spool (85) containing a tape blade (30) wound thereon and partially extending therefrom through the mouth (50), the tape blade (30) terminating in a hook portion (40);
wherein in an extended position the tape blade (30) is unwound from the spool (85) such that the hook portion (40) extends away from the mouth (50);
**characterised in that**
the seam (20d) is formed both above the mouth (50) and at a side of the mouth (50), such that a structure of the first housing portion (20a) extends at least substantially an entire width of the mouth (50), under the tape blade (30);
wherein the tape blade (30) is biased to retract into the housing (20) and wind around the spool (85), such that in a fully retracted position the hook portion (40) abuts the structure of the first housing portion (202).

2. The tape measure of claim 1, further comprising a finger brake opening (70) formed between the first housing portion (20a) and the second housing portion (20b).

3. The tape measure of claim 2, wherein the structure of the first housing portion (20a) that extends at least substantially the entire width of the mouth (50), under the tape blade (30), also defines a portion of the finger brake opening (70) and forms a common tape mouth and finger brake structure (80).

4. The tape measure of claim 3, wherein the seam (20d) is formed behind the finger brake opening (70) in a direction opposite to a direction in which the tape blade (30) extends from the mouth (50), extending away from both the mouth (50) and the finger brake opening (70).

5. The tape measure of any one of the preceding claims, further comprising a first engagement feature (90; 100) formed on one of the structure and the second housing side (20b) and a second engagement feature (100; 90) formed on the other of the structure and the second housing portion (20b), the first and second engagement features shaped to engage at the seam (20d) at the side of the mouth (50).

6. The tape measure of claim 5, wherein the first engagement feature (90; 100) is a protrusion, and the second engagement feature (100; 90) is a recess.

7. The tape measure of claim 5 or claim 6 further comprising a third engagement feature formed on the first housing portion (20a) and a fourth engagement feature formed on the second housing portion (20b), the third engagement feature and the fourth engagement feature shaped to engage at the seam (20d) above the mouth (50).

8. The tape measure of claim 7, wherein one of the third engagement feature and the fourth engagement feature is a protrusion (120), and the other of the third engagement feature and the fourth engagement feature is a recess (130).

9. The tape measure of claim 8, wherein the protrusion (120) and the recess (130) each comprise apertures that form a common path to receive a fastener (20c) that extends across the seam (20d) to secure the first housing portion (20a) and the second housing portion (20b) together.

10. The tape measure of claim 5, further comprising a reinforcement (140) on a terminal end (110) of the structure, defining an exterior of the first housing portion (20a), to interlock the structure to the second housing portion (20b).

11. The tape measure of claim 10, wherein the reinforcement comprises a first securement feature (155).

12. The tape measure of claim 11, wherein the first securement feature (155) comprises a ramped structure configured to deflect or deform around a second securement feature (155) on the second housing portion (20b) to snap fit interlock the first securement feature (155) to the second securement feature (155).

13. The tape measure according to any one of the preceding claims 1-4, further comprising a first engagement feature formed on the first housing portion (20a) and a second engagement feature formed on the second housing portion (20b), the first engagement feature and the second engagement feature shaped to engage at the seam (20d) above the mouth (50).

14. The tape measure of claim 13, wherein one of the first engagement feature and the second engagement feature is a protrusion (120), and the other of the first engagement feature (90) and the second engagement feature is a recess (130).

15. The tape measure of claim 14, wherein the protrusion (120) and the recess (130) each comprise apertures that form a common path to receive a fastener that extends across the seam to secure the first housing portion and the second housing portion together.

16. The tape measure of claim 1, wherein the structure extending under the tape blade (30) adjacent to the mouth (50) is shaped to match and support a contour of the tape blade (30).

## Patentansprüche

1. Maßband (10), umfassend:
ein Gehäuse (20), das einen ersten Gehäuseabschnitt (20a) und einen zweiten Gehäuseabschnitt (20b) umfasst, wobei der erste Gehäuseabschnitt (20a) und der zweite Gehäuseabschnitt (20b) zusammen eine Öffnung (50) definieren und durch eine Naht (20d) getrennt sind; und
eine Spule (85), die so ausgebildet ist, dass sie zwischen dem ersten Gehäuseabschnitt (20a) und dem zweiten Gehäuseabschnitt (20b) befestigt wird, wobei die Spule (85) ein darauf aufgewickeltes und sich teilweise von dort durch die Öffnung (50) erstreckendes Messband (30) enthält, wobei das Messband (30) in einem Hakenabschnitt (40) endet;
wobei in einer ausgefahrenen Position das Messband (30) von der Spule (85) abgewickelt wird, so dass sich der Hakenabschnitt (40) von der Öffnung (50) weg erstreckt;
**dadurch gekennzeichnet, dass**
die Naht (20d) sowohl oberhalb der Öffnung (50) als auch an einer Seite der Öffnung (50) ausgebildet ist, so dass sich eine Struktur des ersten Gehäuseabschnitts (20a) mindestens im Wesentlichen über die gesamte Breite der Öffnung (50) unterhalb des Messbands (30) erstreckt;
wobei das Messband (30) so vorgespannt ist, dass es sich in das Gehäuse (20) zurückzieht und sich um die Spule (85) wickelt, so dass in einer vollständig zurückgezogenen Position der Hakenabschnitt (40) an der Struktur des ersten Gehäuseabschnitts (20a) anschlägt.

2. Maßband nach Anspruch 1, weiter umfassend eine Fingerbremsöffnung (70), die zwischen dem ersten Gehäuseabschnitt (20a) und dem zweiten Gehäuseabschnitt (20b) gebildet ist.

3. Maßband nach Anspruch 2, wobei die Struktur des ersten Gehäuseabschnitts (20a), die sich mindestens im Wesentlichen über die gesamte Breite der Öffnung (50) unterhalb des Messbands (30) erstreckt, auch einen Abschnitt der Fingerbremsöffnung (70) definiert und eine gemeinsame Bandöffnungs- und Fingerbremsstruktur (80) bildet.

4. Maßband nach Anspruch 3, wobei die Naht (20d) hinter der Fingerbremsöffnung (70) in einer Richtung ausgebildet ist, die einer Richtung entgegengesetzt ist, in der sich das Messband (30) von der Öffnung (50) aus erstreckt und sich sowohl von der Öffnung (50) als auch von der Fingerbremsöffnung (70) weg erstreckt.

5. Maßband nach einem der vorstehenden Ansprüche, weiter umfassend ein erstes Eingriffselement (90; 100), das an einem von der Struktur und der zweiten Gehäuseseite (20b) ausgebildet ist, und ein zweites Eingriffselement (100; 90), das an dem anderen von der Struktur und dem zweiten Gehäuseabschnitt (20b) ausgebildet ist, wobei das erste und das zweite Eingriffselement so geformt sind, dass sie an der Naht (20d) an der Seite der Öffnung (50) eingreifen.

6. Maßband nach Anspruch 5, wobei das erste Eingriffselement (90; 100) ein Vorsprung ist und das zweite Eingriffselement (100; 90) eine Vertiefung ist.

7. Maßband nach Anspruch 5 oder Anspruch 6, weiter umfassend ein drittes Eingriffselement, das an dem ersten Gehäuseabschnitt (20a) ausgebildet ist, und ein viertes Eingriffselement, das an dem zweiten Gehäuseabschnitt (20b) ausgebildet ist, wobei das dritte Eingriffselement und das vierte Eingriffselement so geformt sind, dass sie an der Naht (20d) oberhalb der Öffnung (50) eingreifen.

8. Maßband nach Anspruch 7, wobei eines von dem dritten Eingriffselement und dem vierten Eingriffselement ein Vorsprung (120) ist, und das andere von dem dritten Eingriffselement und dem vierten Eingriffselement eine Vertiefung (130) ist.

9. Maßband nach Anspruch 8, wobei der Vorsprung (120) und die Vertiefung (130) jeweils Öffnungen umfassen, die einen gemeinsamen Weg zur Aufnahme eines Befestigungselements (20c) bilden, das sich über die Naht (20d) erstreckt, um den ersten Gehäuseabschnitt (20a) und den zweiten Gehäuseabschnitt (20b) miteinander zu befestigen.

10. Maßband nach Anspruch 5, weiter umfassend eine Verstärkung (140) an einem Abschlussende (110) der Struktur, das eine Außenseite des ersten Gehäuseabschnitts (20a) definiert, um die Struktur mit dem zweiten Gehäuseabschnitt (20b) zu verriegeln.

11. Maßband nach Anspruch 10, wobei die Verstärkung ein erstes Befestigungselement (155) umfasst.

12. Maßband nach Anspruch 11, wobei das erste Befestigungselement (155) eine abgeschrägte Struktur umfasst, die so ausgebildet ist, dass sie um ein zweites Befestigungselement (155) an dem zweiten Gehäuseabschnitt (20b) herum ausweicht oder sich verformt, um das erste Befestigungselement (155) mit dem zweiten Befestigungselement (155) durch eine Schnappverbindung zu verriegeln.

13. Maßband nach einem der Ansprüche 1-4, weiter umfassend ein erstes Eingriffselement, das an dem ersten Gehäuseabschnitt (20a) ausgebildet ist, und ein zweites Eingriffselement, das an dem zweiten Gehäuseabschnitt (20b) ausgebildet ist, wobei das erste Eingriffselement und das zweite Eingriffselement so geformt sind, dass sie an der Naht (20d) oberhalb der Öffnung (50) eingreifen.

14. Maßband nach Anspruch 13, wobei eines von dem ersten Eingriffselement und dem zweiten Eingriffselement ein Vorsprung (120) ist, und das andere von dem ersten Eingriffselement (90) und dem zweiten Eingriffselement eine Vertiefung (130) ist.

15. Maßband nach Anspruch 14, wobei der Vorsprung (120) und die Vertiefung (130) jeweils Öffnungen umfassen, die einen gemeinsamen Weg zur Aufnahme eines Befestigungselements bilden, das sich über die Naht erstreckt, um den ersten Gehäuseabschnitt und den zweiten Gehäuseabschnitt miteinander zu befestigen.

16. Maßband nach Anspruch 1, wobei die Struktur, die sich unterhalb des Messbands (30) neben der Öffnung (50) erstreckt, so geformt ist, dass sie einer Kontur des Messbands (30) entspricht und diese stützt.

## Revendications

1. Mètre ruban (10) comprenant :
un boîtier (20) comprenant une première partie (20a) de boîtier et une deuxième partie (20b) de boîtier, la première partie (20a) de boîtier et la deuxième partie (20b) de boîtier définissant ensemble une bouche (50), et étant séparées par un joint (20d) ; et
une bobine (85) configurée pour être fixée entre la première partie (20a) de boîtier et la deuxième partie (20b) de boîtier, la bobine (85) contenant une lame (30) de ruban enroulée sur celle-ci et s'étendant partiellement à partir de celle-ci à travers la bouche (50), la lame (30) de ruban se terminant par une partie de crochet (40) ;
dans lequel, dans une position étendue, la lame (30) de ruban est déroulée de la bobine (85) de sorte que la partie de crochet (40) s'étend à l'écart de la bouche (50) ; **caractérisé en ce que**
le joint (20d) est formé à la fois au-dessus de la bouche (50) et au niveau d'un côté de la bouche (50), de sorte qu'une structure de la première partie (20a) de boîtier s'étend au moins sensiblement sur toute une largeur de la bouche (50), sous la lame (30) de ruban ;
dans lequel la lame (30) de ruban est sollicitée pour se rétracter dans le boîtier (20) et s'enrouler autour de la bobine (85), de telle sorte que, dans une position complètement rétractée, la partie de crochet (40) vient en butée contre la structure de la première partie (20a) de boîtier.

2. Mètre ruban selon la revendication 1, comprenant en outre une ouverture (70) de frein à doigt formée entre la première partie (20a) de boîtier et la deuxième partie (20b) de boîtier.

3. Mètre ruban selon la revendication 2, dans lequel la structure de la première partie (20a) de boîtier qui s'étend au moins sensiblement sur toute la largeur de la bouche (50), sous la lame (30) de ruban, définit également une partie de l'ouverture (70) de frein à doigt et forme une structure commune (80) de bouche de ruban et de frein à doigt.

4. Mètre ruban selon la revendication 3, dans lequel le joint (20d) est formé derrière l'ouverture (70) de frein à doigt dans une direction opposée à une direction dans laquelle la lame (30) de ruban s'étend à partir de la bouche (50), s'éloignant à la fois de la bouche (50) et de l'ouverture (70) de frein à doigt.

5. Mètre ruban selon l'une quelconque des revendications précédentes, comprenant en outre une première caractéristique d'entrée en prise (90 ; 100) formée sur l'un de la structure et du deuxième côté (20b) de boîtier et une deuxième caractéristique d'entrée en prise (100 ; 90) formée sur l'autre de la structure et de la deuxième partie (20b) de boîtier, les première et deuxième caractéristiques d'entrée en prise étant formées pour venir en prise au niveau du joint (20d) sur le côté de la bouche (50).

6. Mètre ruban selon la revendication 5, dans lequel la première caractéristique d'entrée en prise (90 ; 100) est une saillie, et la deuxième caractéristique d'entrée en prise (100 ; 90) est un évidement.

7. Mètre ruban selon la revendication 5 ou la revendication 6 comprenant en outre une troisième caractéristique d'entrée en prise formée sur la première partie (20a) de boîtier et une quatrième caractéristique d'entrée en prise formée sur la deuxième partie (20b) de boîtier, la troisième caractéristique d'entrée en prise et la quatrième caractéristique d'entrée en prise étant formées pour venir en prise au niveau du joint (20d) au-dessus de la bouche (50).

8. Mètre ruban selon la revendication 7, dans lequel l'une parmi la troisième caractéristique d'entrée en prise et la quatrième caractéristique d'entrée en prise est une saillie (120), et l'autre parmi la troisième caractéristique d'entrée en prise et la quatrième caractéristique d'entrée en prise est un évidement (130).

9. Mètre ruban selon la revendication 8, dans lequel la saillie (120) et l'évidement (130) comprennent chacun des ouvertures qui forment un chemin commun pour recevoir une attache (20c) qui s'étend à travers le joint (20d) pour fixer ensemble la première partie (20a) de boîtier et la deuxième partie (20b) de boîtier.

10. Mètre ruban selon la revendication 5, comprenant en outre un renfort (140) sur une extrémité de terminaison (110) de la structure, définissant un extérieur de la première partie (20a) de boîtier, pour verrouiller la structure avec la deuxième partie (20b) de boîtier.

11. Mètre ruban selon la revendication 10, dans lequel le renfort comprend une première caractéristique de fixation (155).

12. Mètre ruban selon la revendication 11, dans lequel la première caractéristique de fixation (155) comprend une structure en rampe configurée pour dévier ou se déformer autour d'une deuxième caractéristique de fixation (155) sur la deuxième partie (20b) de boîtier pour verrouiller la première caractéristique de fixation (155) avec la deuxième caractéristique de fixation (155) selon un ajustement par encliquetage.

13. Mètre ruban selon l'une quelconque des revendications précédentes 1 à 4, comprenant en outre une première caractéristique d'entrée en prise formée sur la première partie (20a) de boîtier et une deuxième caractéristique d'entrée en prise formée sur la deuxième partie (20b) de boîtier, la première caractéristique d'entrée en prise et la deuxième caractéristique d'entrée en prise étant formées pour venir en prise au niveau du joint (20d) au-dessus de la bouche (50).

14. Mètre ruban selon la revendication 13, dans lequel l'une parmi la première caractéristique d'entrée en prise et la deuxième caractéristique d'entrée en prise est une saillie (120), et l'autre parmi la première caractéristique d'entrée en prise (90) et la deuxième caractéristique d'entrée en prise est un évidement (130).

15. Mètre ruban selon la revendication 14, dans lequel la saillie (120) et l'évidement (130) comprennent chacun des ouvertures qui forment un chemin commun pour recevoir une attache qui s'étend à travers le joint pour fixer ensemble la première partie de boîtier et la deuxième partie de boîtier.

16. Mètre ruban selon la revendication 1, dans lequel la structure s'étendant sous la lame (30) de ruban adjacente à la bouche (50) est formée pour correspondre à et soutenir un contour de la lame (30) de ruban.
